# EUROPEAN PATENT SPECIFICATION

(11) **EP 0 581 549 B1**
(45) Date of publication and mention of the grant of the patent: **24.01.1996**
(21) Application number: 93305855.4
(22) Date of filing: 22.07.1993
(51) Int. Cl.: B60C 1/00

(54) **Radial tyre**
Radialer Luftreifen
Bandage pneumatique radial

(30) Priority: 23.07.1992 JP 196666/92
(43) Date of publication of application: 02.02.1994
(73) Proprietor: SUMITOMO RUBBER INDUSTRIES LIMITED, Kobe-shi Hyogo-ken (JP)
(72) Inventor: Saito, Yuichi, Kobe-shi, Hyogo-ken (JP); Kikuchi, Naohiko, Akashi-shi, Hyogo-ken (JP)
(74) Representative: Stewart, Charles Geoffrey

(56) References cited:
- EP-A- 0 265 070
- US-A- 3 802 478
- PATENT ABSTRACTS OF JAPAN vol. 014, no. 228 (M-973)15 May 1990
- DATABASE WPIL Week 8929, 7 June 1989 Derwent Publications Ltd., London, GB; AN 89-209364
- DATABASE WPIL Week 8231, Derwent Publications Ltd., London, GB; AN 82-65063E
- PATENT ABSTRACTS OF JAPAN vol. 014, no. 418 (M-1022)10 September 1990

## Description

The present invention relates to a radial tyre.

In order to improve the running stability of a tyre, various proposals have hitherto been made. For example, Japanese Patent Kokai No 63-81137 disclosed a reinforced rubber composition for tyres, wherein a short fibre is bonded with rubber by a silane coupling agent. However, running stability and running comfort are antinomic properties with each other and, therefore, the ride comfort becomes inferior when running stability is improved. In order to improve these antinomic properties, Japanese Patent Kokai No 2-162102 proposed a pneumatic tyre which comprises a rubber layer containing short fibres oriented at an angle of 45 ± 20°C to the circumferential direction of the tyre as the sidewalls. However, these tyres are not satisfactory in running stability and ride comfort and, further, there is a problem of tyre weight.

An object of the present invention is to provide a lightweight radial tyre having improved running stability as well as excellent ride comfort and rolling resistance.

Accordingly the present invention provides a radial tyre comprising a tread, a sidewall and a bead, said sidewall comprising a rubber composition comprising:
(i) a rubber component consisting of 40 to 70 parts by weight of a butadiene rubber and 30 to 60 parts by weight of a natural rubber and/or an isoprene rubber, and
(ii) 10 to 30 parts by weight of a short fibre and not more than 30 parts by weight of a carbon black based on 100 parts by weight of the rubber component,
characterised in that not less than 90% of the short fibre is oriented at an angle of ±20° to the circumferential direction of the tyre and the ratio E*ₐ/E*_{b} of the complex elastic modulus E*ₐ at the direction of orientation to the complex elastic modulus E*_{b} at a direction perpendicular to the orientation direction is not less than 3, and further the thickness of the sidewall is not more than 6mm.

Preferably the carbon black has an iodine adsorption of 30 to 90mg/g.

Further aspects of the invention will become apparent below.

The rubber component may be any which forms an elastomeric rubber by vulcanisation. Of those usable, butadiene rubber, natural rubber and isoprene rubber are particularly preferred. In the present invention, 30 to 60m parts by weight of the natural rubber and/or isoprene rubber are formulated in 40 to 70 parts by weight of the butadiene rubber.

The short fibre may be for example nylon, polyester, aramid, rayon, cotton or the like, used alone or in combinations thereof. The short fibre may be surface-treated to improve adhesion with the rubber component.

For the sidewall of the tyre of the present invention, it is important to orient the short fibre at an angle of ±20° to the circumferential direction of the tyre. Thereby, both running stability and ride comfort can be improved. If the short fibre is not oriented at the predetermined direction, the running stability is scarcely improved.

In the present invention, it is also important that a ratio E*ₐ of the complex elastic modulus E*ₐ atan orientation direction to the complex elastic modulus E*_{b} in a direction perpendicular to the orientation direction is not less than 3, preferably 3.5 to 10.0. If the ratio is less than 3, the handling response is poor. The complex elastic modulus, as explained in relation to the Examples, is determined by a viscoelastic spectrometer.

The amount of the short fibre is 10 to 30 parts by weight, preferably 10 to 20 parts by weight, based on 100 part by weight of the rubber component. If the amount of the short fibre is less than 10 parts by weight, the running stability is scarcely improved. If the amount is more than 30 parts by weight, both rolling resistance and ride comfort are deteriorated.

The length (L) of the short fibre is preferably 20µm or more, particularly 50 to 500µm. Further, a ratio (L/D) of the length (L) to the diameter (D) of the short fibre is preferably 200 or more, particularly 200 to 2000. When the ratio is less than 200, the rubber can not be provided with sufficient strength.

As the carbon black, for example, there may be used HAF (commercially available from Show Cabot Co), FEF (commercially available from Mitsubishi Kasei Co), GPF (commercially available from Tokai Carbon Co) or the like. Preferably, those having an iodine adsorption of 30 to 90mg/g can be used. If the iodine adsorption is less than 30mg/g, the reinforcing effect is lower, which results in more deterioration of strength and cut resistance fro the preferred situation. When it is more than 90mg/g, the heat generation is larger and the rolling resistance is deteriorated.

The amount of the carbon to be added is not more than 30 parts by weight, based on 100 parts by weight of the rubber component. If the amount exceeds 30 parts by weight, heat generation of the rubber becomes larger and the rolling resistance also becomes larger. That is, the circumferential direction of the tyre is provided with high elastic modulus by orienting a suitable amount of the short fibre having a predetermined size at the circumferential direction and, at the same time, the amount of the carbon black which increases the hardness of the whole rubber is decreased. thereby, the rolling resistance and running stability can be well-balanced and reduction in weight can be accomplished.

To the rubber composition which constitutes the radial tyre of the present invention, additives such as oil, antioxidant, wax, vulcanisation accelerator and the like may be further formulated.

The above components are mixed according to the conventional method to obtain a rubber composition for a sidewall. This is combined with the other components (tread and bead etc) and then vulcanised in a mould to produce a tyre. In the present invention, it is important that the thickness of the sidewall of the tyre is 6mm or less. Thereby, the orientation property of the short fibre is increased and the rolling resistance is improved and, further, reduction in weight is accomplished. When the thickness exceeds 3mm, the internal elastic modulus is deteriorated and the orientation property of the internal short fibre is deteriorated and, further the rolling resistance is deteriorated.

As described above, according to the present invention, there is provided a lightweight radial tyre having improved running stability as well as excellent riding comfort and rolling resistance.

The following Examples and Comparative Examples further illustrate the present invention but are not to be construed to limit the scope thereof.

### Examples 1 to 4 and Comparative Examples 1 to 5

A rubber composition was prepared according to the formulation shown in Table 1 and then formed into a tyre (tyre size 175/70R13). In Examples 1 to 4, a short fibre was oriented at an angle of ±20°C to the circumferential direction of the tyre. In Comparative Examples 1 to 5, the short fibre was oriented as shown in Table 1. The thickness of the sidewall was 4mm.

For these tyres, the following items were evaluated. All tests were conducted at an inside pressure of 2.5kgf/cm². The results are shown in Table 1.

The evaluation was conducted as follows.
(1) Rolling Resistance
   A rolling resistance was determined using a rolling resistance tester at a speed of 80km/h and a load of 350kgf. Numbers in Table 1 are indexes which are calculated as the tyres of Comparative Examples 1, 2 and 4 being 100. The larger the number, the better the rolling resistance.
(2) Running Stability (Dry State)
   A person rode in a 1600cc front engine, front drive (FF) car equipped with 4 sample tyres of the present invention and drove on a dry asphalt road of a tyre test lane of Sumitomo Rubber Co, Okayama Prefecture, Japan. After driving, the handling response, rigid feeling, grip and the like were organoleptically evaluated in three grades. The larger the number, the better the running stability.
(3) Running Stability (Wet State)
   In the same way as described above except that the test was conducted on a wet asphalt road, the handling response and grip were evaluated in three grades. The larger the number, the better the running stability.
(4) Ride Comfort
   In the same manner as that described above except that the test was conducted on a dry road with differences in level, Belgian Block (road paved with stone) and Bitzman Block (road paved with small stone), jolt feeling, up-thrust and damping were evaluated in three grades. The larger the number, the better the ride comfort.
(5) Complex elastic modulus was measured by a viscoelastic spectrometer. The measuring condition were as follows:
   - Temp.: = 70°C
   - Frequency: = 10Hz
   - Initial strain: = 10%
   - Dynamic strain: = 1%
   - Machine: = VSE-FIII, available from Iwamoto Seisakusho Co Limited

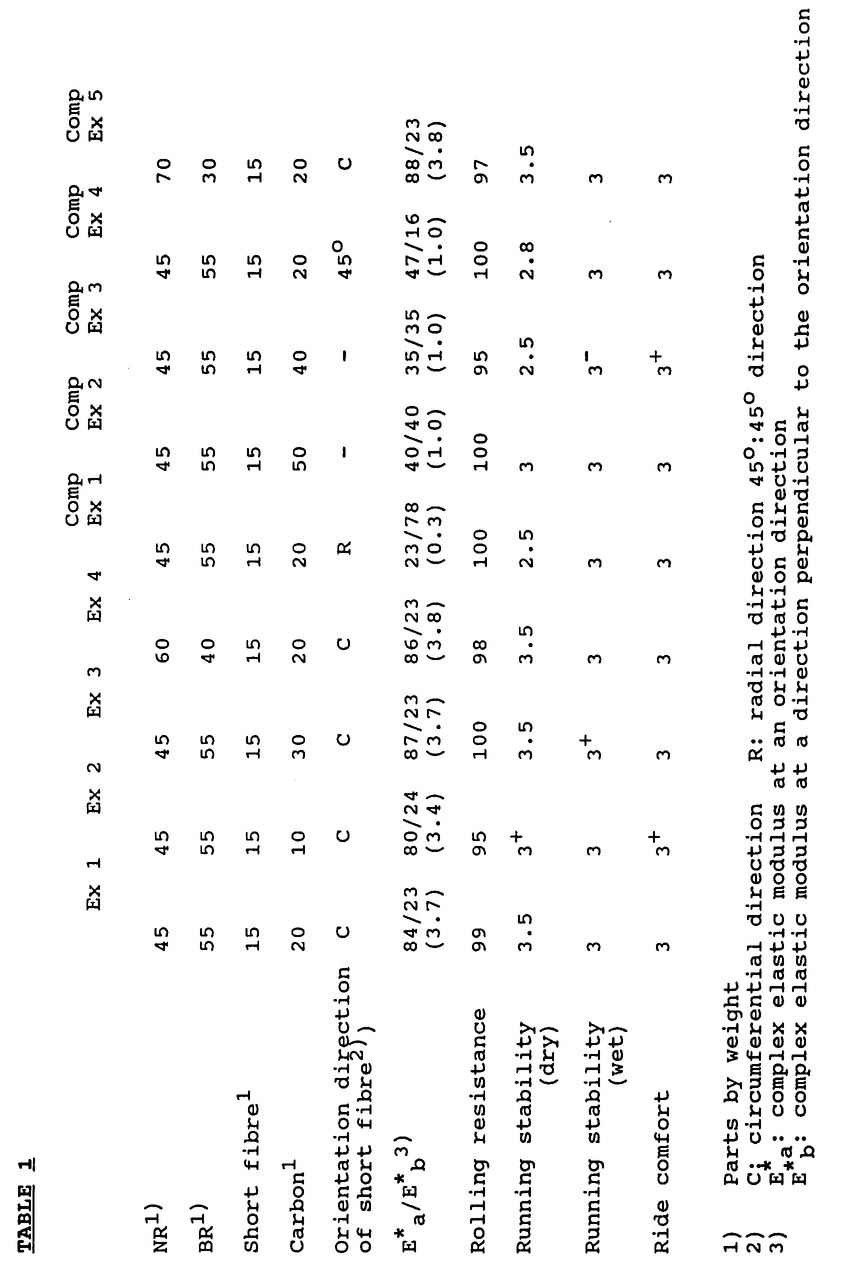

As is apparent from Table 1, the tyre of Examples 1 to 4 are superior in rolling resistance, running stability and ride comfort in comparison with Comparative Examples 1 to 5.

### Examples 5 to 7 and Comparative Examples 6 to 7

A sample was prepared according to the formulation shown in Table 2 and the performance characteristics of the tyre (in the case of changing a thickness of a sidewall) were evaluated. The sidewalls were formed by extruding with a sidewall extruder or calender. The short fibre was oriented in the extrusion direction, that is almost all of the short fibre was oriented at an angle of ±20° (average 0°) to the circumferential direction of the tyre. By measuring the surface elastic modulus (E*ₛ) and the internal elastic modulus (E*_{I}) according to the following method the influence of the thickness on change of the orientation angle in the surface and internal part was evaluated. The results are shown in Table 2.

Differences of orientation in the surface and internal part are shown compared to the ratio of the elastic modulus. The larger the ratio, the smaller the difference in orientation in the surface and internal parts. This showed that the short fibre was also oriented to the circumferential direction in the internal part. This also shows that the smaller the thickness of the sidewall, the larger the ratio of elastic modulus, and the short fibre is uniformly oriented at the surface and in the internal part.

Although the rolling resistance is decreased, the running stability is scarcely deteriorated and is superior in comparison with Comparative Example 7.

As is apparent from Table 2, regarding the tyre of Comparative Example 6 wherein a thickness of the sidewall exceeds 6mm, the rolling resistance was remarkably deteriorated.

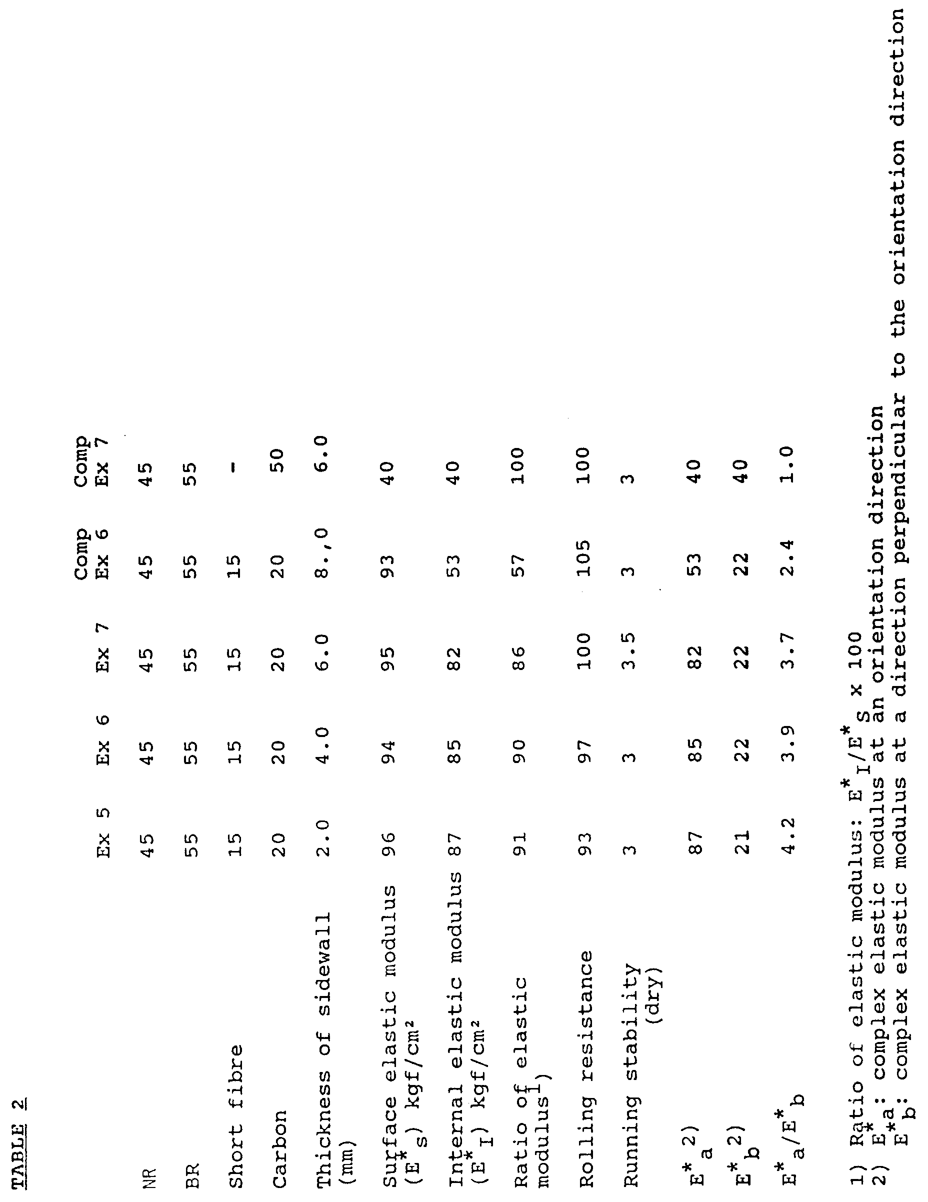

### Examples 8 to 9 and Comparative Examples 8 to 9

A sample was prepared according to the formulation shown in Table 3 and the performance characteristics of the tyre (in the case of changing an amount of a short fibre) were evaluated. Further the orientation direction of the short fibre was in a given direction (the circumferential direction) and the thickness of the sidewall was constant (4mm). The results are shown in Table 3.

As is apparent from Table 3, regarding the tyre of Comparative Example 8 wherein the amount of the short fibre was not more than 10% by weight, the running stability is not improved. Regarding the tyre of Comparative Example 9 wherein the amount of the short fibre exceeds 30% by weight, the rolling resistance was deteriorated and the ride comfort was also deteriorated.

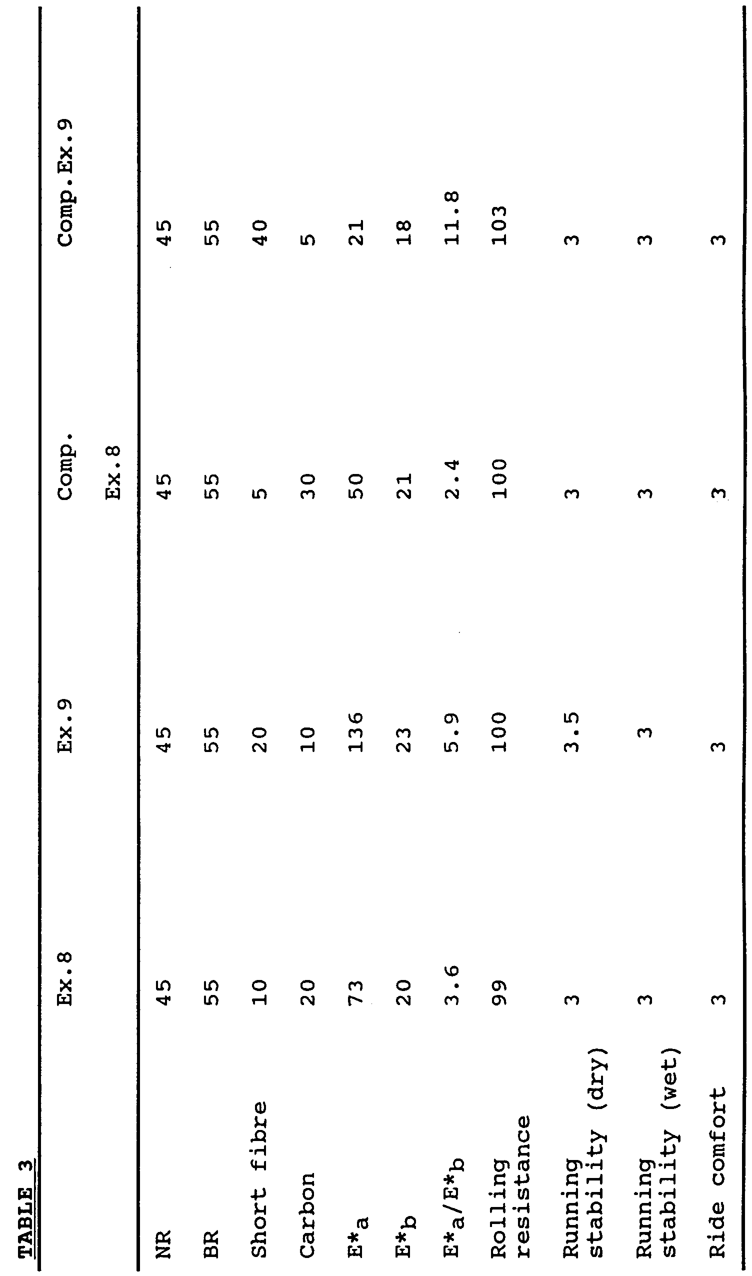

## Claims

1. A radial tyre comprising a tread, a sidewall and a bead, said sidewall comprising a rubber composition comprising:
(i) a rubber component consisting of 40 to 70 parts by weight of a butadiene rubber and 30 to 60 parts by weight of a natural rubber and/or an isoprene rubber, and
(ii) 10 to 30 parts by weight of a short fibre and not more than 30 parts by weight of a carbon black based on 100 parts by weight of the rubber component,
characterised in that not less than 90% of the short fibre is oriented at an angle of ±20° to the circumferential direction of the tyre and the ratio E*ₐ/E*_{b} of the complex elastic modulus E*ₐ at the direction of orientation to the complex elastic modulus E*_{b} at a direction perpendicular to the orientation direction is not less than 3, and further the thickness of the sidewall is not more than 6mm.

2. A radial tyre according to claim 1, characterised in that the iodine adsorption of the carbon black is 30 to 90mg/g.

3. A radial tyre according to claim 1 or 2, characterised in that the short fibre is selected from the group consisting of nylon, polyester, aramid, rayon and cotton.

4. A radial tyre according to claim 1, 2 or 3, characterised in that the length of the short fibre is 50 to 500µm.

5. A radial tyre according to claim 1, 2, 3 and 4, characterised in that the ratio (L/D) of the length (L) to the diameter (D) of the short fibre is 200 to 2000.

## Patentansprüche

1. Ein Radialreifen mit einer Lauffläche, einer Seitenwand und einem Wulst, wobei die Seitenwand eine Gummizusammensetzung umfaßt mit:
(i) einer Gummikomponente, die aus 40 bis 70 Gewichtsteilen eines Butadiengummis und 30 bis 60 Gewichtsteilen eines natürlichen Gummis und/oder eines Isoprengummis besteht, und
(ii) 10 bis 30 Gewichtsteilen einer kurzen Faser und nicht mehr als 30 Gewichtsteilen eines Russes, basierend auf 100 Gewichtsteilen der Gummikomponente,
dadurch **gekennzeichnet,**
daß nicht weniger als 90 % der kurzen Faser in einem Winkel von ± 20°C zu der Umfangsrichtung des Reifens ausgerichtet sind, und das Verhältnis E*ₐ/E*_{b} des komplexen Elastizitätsmoduls E*ₐ bei der Richtung der Ausrichtung zu dem komplexen Elastizitätsmodul E*_{b} bei einer Richtung senkrecht zu der Ausrichtungsrichtung nicht weniger als 3 beträgt, und weiter die Dicke der Seitenwand nicht mehr als 6 mm beträgt.

2. Ein Radialreifen nach Anspruch 1,
dadurch **gekennzeichnet,**
daß die Iodadsorption des Russes 30 bis 90 mg/g beträgt.

3. Ein Radialreifen nach Anspruch 1 oder 2,
dadurch **gekennzeichnet,**
daß die kurze Faser aus der Gruppe ausgewählt ist, die aus Nylon, Polyester, Aramid, Rayon und Baumwolle besteht.

4. Ein Radialreifen nach Anspruch 1, 2 oder 3,
dadurch **gekennzeichnet,**
daß die Länge der kurzen Faser 50 bis 500 µm beträgt.

5. Ein Radialreifen nach Anspruch 1, 2, 3 und 4,
dadurch **gekennzeichnet,**
daß das Verhältnis (L/D) der Länge (L) zum Durchmesser (D) der kurzen Faser 200 bis 2000 beträgt.

## Revendications

1. Pneumatique à carcasse radiale, comprenant une bande de roulement, un flanc et un talon, le flanc comprenant une composition de caoutchouc qui contient :
(i) un ingrédient de caoutchouc constitué de 40 à 70 parties en poids d'un caoutchouc de butadiène et 30 à 60 parties en poids de caoutchouc naturel et/ou de caoutchouc d'isoprène, et
(ii) 10 à 30 parties en poids de fibres courtes et au maximum 30 parties en poids de noir de carbone pour 100 parties en poids de l'ingrédient de caoutchouc,
caractérisé en ce que 90 % au moins des fibres courtes sont orientées avec au moins un angle de ±20° par rapport à la direction circonférentielle du pneumatique, et le rapport E*ₐ/E*_{b} du module élastique complexe E*ₐ dans la direction d'orientation au module élastique complexe E*_{b} en direction perpendiculaire à la direction d'orientation n'est pas inférieur à 3 et, en outre, l'épaisseur du flanc ne dépasse pas 6 mm.

2. Pneumatique à carcasse radiale selon la revendication 1, caractérisé en ce que l'indice d'adsorption d'iode du noir de carbone est compris entre 30 et 90 mg/g.

3. Pneumatique à carcasse radiale selon la revendication 1 ou 2, caractérisé en ce que les fibres courtes sont choisies dans le groupe qui comprend le "Nylon", le polyester, l'aramide, la rayonne et le coton.

4. Pneumatique à carcasse radiale selon la revendication 1, 2 ou 3, caractérisé en ce que la longueur des fibres courtes est comprise entre 50 et 500 µm.

5. Pneumatique à carcasse radiale selon la revendication 1, 2, 3 et 4, caractérisé en ce que le rapport (L/D) de la longueur (L) au diamètre (D) des fibres courtes est compris entre 200 et 2 000.
